# EUROPEAN PATENT SPECIFICATION

(11) **EP 4 344 835 B1**
(45) Date of publication and mention of the grant of the patent: **18.11.2026**
(21) Application number: 23198260.4
(22) Date of filing: 19.09.2023
(51) Int. Cl.: B25J 11/00

(54) **APPARATUS, APPARATUS CONTROL METHOD, AND PROGRAM**
VORRICHTUNG, VORRICHTUNGSSTEUERUNGSVERFAHREN UND PROGRAMM
APPAREIL, PROCÉDÉ DE COMMANDE D'APPAREIL ET PROGRAMME

(30) Priority: 28.09.2022 JP 2022154437
(43) Date of publication of application: 03.04.2024
(73) Proprietor: Casio Computer Co., Ltd., Tokyo 151-8543 (JP)
(72) Inventor: Hasegawa, Hirokazu, Tokyo, 205-8555 (JP); Nimura, Wataru, Tokyo, 205-8555 (JP); Ichikawa, Erina, Tokyo, 205-8555 (JP)
(74) Representative: Grünecker Patent- und Rechtsanwälte PartG mbB

(56) References cited:
- EP-A1- 1 112 821
- KR-B1- 102 051 217
- US-A1- 2007 270 074
- US-A1- 2019 279 070
- US-A1- 2021 089 172
- US-A1- 2021 402 589
- US-A1- 2022 297 307
- US-A1- 20240 246 242

## Description

The present disclosure relates generally to an apparatus, an apparatus control method, and a program.

Devices have been developed for controlling the actions of apparatuses such as robots and the like so as to make the apparatuses more similar to familiar beings such as friends or pets. Additionally, technology is known for imparting pseudo-emotions to such apparatuses. For example, Unexamined Japanese Patent Application Publication No. 2021-069767 describes an apparatus control device that sets, in accordance with an external stimulus acting on an apparatus, an emotion parameter expressing a pseudo-emotion of the apparatus, and controls an action of the apparatus in accordance with the set emotion parameter. Further examples of devices that us pseudo-emotions are described in US 2021/402589 A1, US 2021/089172 A1, US 2019/279070 A1, US 2022/297307 A1, KR 102 051 217 B1, and US 2007/0270074 A1.

In the technology described in Unexamined Japanese Patent Application Publication No. 2021-069767, when an external stimulus acts on the apparatus, the pseudo-emotion is generated on the basis of the content of that external stimulus, and the action is executed on the basis of the generated pseudo-emotion. However, when an action based on a pseudo-emotion continues for a predetermined period or longer without changing, there is a concern that a user will feel that the action is unnatural.

The present disclosure is made with the view of the above situation, and an objective of the present disclosure is to appropriately generate a pseudo-emotion.

This is achieved by the features of the independent claims. Advantageous embodiments of the present invention are subject matter of the dependent claims.

According to the present disclosure, it is possible to appropriately generate a pseudo-emotion.

A more complete understanding of this application can be obtained when the following detailed description is considered in conjunction with the following drawings, in which:
FIG. 1 is a drawing illustrating the appearance of a robot according to an embodiment;
FIG. 2 is a cross-sectional view viewed from a side surface of the robot according to the embodiment;
FIG. 3 is a drawing for explaining a housing of the robot according to the embodiment;
FIG. 4 is a block diagram illustrating the functional configuration of the robot according to the embodiment;
FIG. 5 is a drawing for explaining an example of an emotion map according to the embodiment;
FIG. 6 is a drawing for explaining an example of a personality value radar chart according to the embodiment;
FIG. 7 is a drawing for explaining an example of a control content table according to the embodiment;
FIG. 8 is a drawing for explaining an example of an amount of change table according to the embodiment;
FIG. 9 is a flowchart illustrating the flow of robot control processing according to the embodiment;
FIG. 10 is a flowchart illustrating the flow of emotion change processing according to the embodiment;
FIG. 11 is a drawing illustrating an example of emotion data changing due to the emotion change processing according to the embodiment;
FIG. 12A is a drawing for explaining an example of an amount of change table according to a modified example;
FIG. 12B is a drawing for explaining an example of an amount of change table according to a modified example;
FIG. 12C is a drawing for explaining an example of an amount of change table according to a modified example; and
FIG. 13 is a block diagram illustrating the functional configuration of an apparatus control device and a robot according to a modified example.

Hereinafter, embodiments of the present disclosure are described while referencing the drawings. Note that, in the drawings, identical or corresponding components are denoted with the same reference numerals.

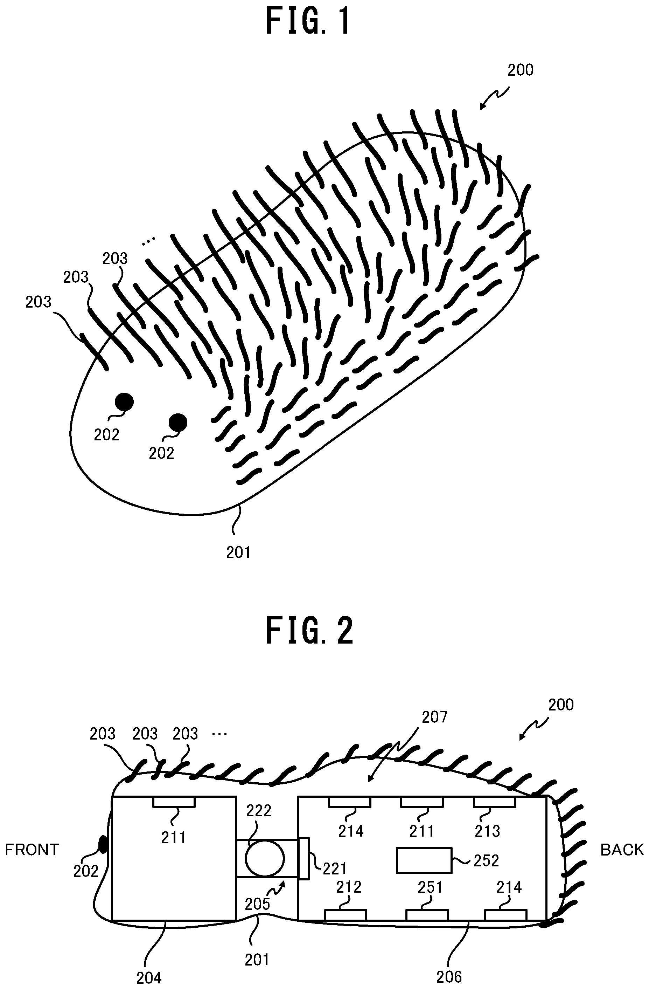

An embodiment, in which an apparatus control device according to an embodiment is applied to a robot 200 illustrated in FIG. 1, is described while referencing the drawings. The robot 200 according to the embodiment is a pet robot that resembles a small animal. As illustrated in FIG. 1, the robot 200 is covered with an exterior 201 provided with bushy fur 203 and decorative parts 202 resembling eyes. A housing 207 of the robot 200 is accommodated in the exterior 201. As illustrated in FIG. 2, the housing 207 of the robot 200 includes a head 204, a coupler 205, and a torso 206. The head 204 and the torso 206 are coupled by the coupler 205.

As illustrated in FIG. 2, the torso 206 extends in a front-back direction. Additionally, the torso 206 contacts, via the exterior 201, a placement surface such as a floor, a table, or the like on which the robot 200 is placed. As illustrated in FIG. 2, a twist motor 221 is provided at a front end of the torso 206, and the head 204 is coupled to the front end of the torso 206 via the coupler 205. The coupler 205 is provided with a vertical motor 222. Note that, in FIG. 2, the twist motor 221 is provided on the torso 206, but may be provided on the coupler 205 or on the head 204.

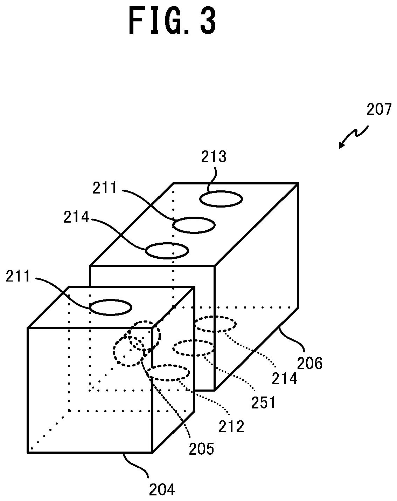

The coupler 205 couples the torso 206 and the head 204 so as to enable rotation (by the twist motor 221) around a first rotational axis that passes through the coupler 205 and extends in a front-back direction of the torso 206. The twist motor 221 rotates the head 204, with respect to the torso 206, clockwise (right rotation) within a forward rotation angle range around the first rotational axis (forward rotation), counter-clockwise (left rotation) within a reverse rotation angle range around the first rotational axis (reverse rotation), and the like. Note that, in this description, the term "clockwise" refers to clockwise when viewing the direction of the head 204 from the torso 206. Additionally, herein, clockwise rotation is also referred to as "twist rotation to the right", and counter-clockwise rotation is also referred to as "twist rotation to the left." A maximum value of the angle of twist rotation to the right (right rotation) or the left (left rotation) can be set as desired, and the angle of the head 204 in a state, as illustrated in FIG. 3, in which the head 204 is not twisted to the right or the left is referred to as a "twist reference angle."

The coupler 205 couples the torso 206 and the head 204 so as to enable rotation (by the vertical motor 222) around a second rotational axis that passes through the coupler 205 and extends in a width direction of the torso 206. The vertical motor 222 rotates the head 204 upward (forward rotation) within a forward rotation angle range around the second rotational axis, downward (reverse rotation) within a reverse rotation angle range around the second rotational axis, and the like. A maximum value of the angle of rotation upward or downward can be set as desired, and the angle of the head 204 in a state, as illustrated in FIG. 3, in which the head 204 is not rotated upward or downward is referred to as a "vertical reference angle."

When the head 204 is rotated to the vertical reference angle or upward from the vertical reference angle by vertical rotation around the second rotational axis, the head 204 can contact, via the exterior 201, the placement surface such as the floor or the table on which the robot 200 is placed. Note that, in FIG. 2, an example is illustrated in which the first rotational axis and the second rotational axis are orthogonal to each other, but a configuration is possible in which the first and second rotational axes are not orthogonal to each other.

As illustrated in FIG. 2, the robot 200 includes a touch sensor 211 on the head 204. The touch sensor 211 can detect petting or striking of the head 204 by a user. The robot 200 also includes the touch sensor 211 on the torso 206. The touch sensor 211 can detect petting or striking of the torso 206 by the user.

The robot 200 includes an acceleration sensor 212 on the torso 206. The acceleration sensor 212 can detect an attitude (orientation) of the robot 200, and can detect being picked up, the orientation being changed, being thrown, and the like by the user. The robot 200 includes a gyrosensor 213 on the torso 206. The gyrosensor 213 can detect rolling, rotating, and the like of the robot 200.

The robot 200 includes a microphone 214 on the torso 206. The microphone 214 can detect external sounds. Furthermore, the robot 200 includes a speaker 215 on the torso 206. The speaker 215 can be used to emit a sound (sound effect) of the robot 200.

The robot 200 includes a power receiver 251 on a bottom surface of the torso 206. The robot 200 is driven by a rechargeable battery (cell) 252 provided in the housing 207, and receives, by the power receiver 251, power sent from a wireless charger to charge the battery 252. In one example, the wireless charger resembles a pet cage (house), and includes a sheet-like power-supplying placement surface. Charging of the battery 252 starts when the robot 200 is placed on the power-supplying placement surface of the wireless charger.

Note that, in the present embodiment, the acceleration sensor 212, the gyrosensor 213, the microphone 214, and the speaker 215 are provided on the torso 206, but a configuration is possible in which all or a portion of these components are provided on the head 204. Note that a configuration is possible in which, in addition to the acceleration sensor 212, the gyrosensor 213, the microphone 214, and the speaker 215 provided on the torso 206, all or a portion of these components are also provided on the head 204. The touch sensor 211 is provided on each of the head 204 and the torso 206, but a configuration is possible in which the touch sensor 211 is provided on only one of the head 204 and the torso 206. Moreover, a configuration is possible in which a plurality of any of these components is provided.

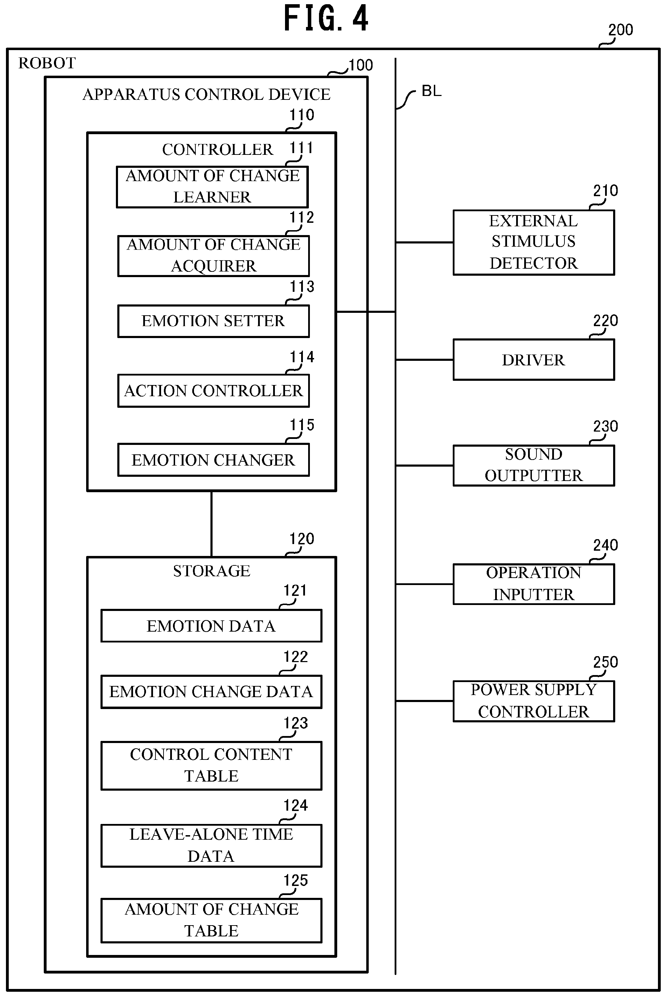

Next, the functional configuration of the robot 200 is described. As illustrated in FIG. 4, the robot 200 includes an apparatus control device 100, an external stimulus detector 210, a driver 220, a sound outputter 230, an operation inputter 240, and a power supply controller 250. Additionally, the apparatus control device 100 includes a controller 110, and a storage 120. In FIG. 4, the apparatus control device 100, and the external stimulus detector 210, the driver 220, the sound outputter 230, the operation inputter 240, and the power supply controller 250 are connected to each other via a bus line BL, but this is merely an example.
A configuration is possible in which the apparatus control device 100, and the external stimulus detector 210, the driver 220, the sound outputter 230, the operation inputter 240, and the power supply controller 250 are connected by a wired interface such as a universal serial bus (USB) cable or the like, or by a wireless interface such as Bluetooth (registered trademark) or the like. Additionally, a configuration is possible in which the controller 110 and the storage 120 are connected via the bus line BL.

The apparatus control device 100 controls, by the controller 110 and the storage 120, actions of the robot 200.

In one example, the controller 110 is configured from a central processing unit (CPU) or the like, and executes various processings (robot control processing, emotion change processing, and the like), described later, using programs stored in the storage 120. Note that the controller 110 is compatible with multithreading functionality, in which a plurality of processings are executed in parallel. As such, the controller 110 can execute the various processings (robot control processing, emotion change processing, and the like), described later, in parallel. Additionally, the controller 110 is provided with a clock function and a timer function, and can measure the date and time, and the like.

The controller 110 includes, as a functional configuration according to the present disclosure, an amount of change learner 111, an amount of change acquirer 112, an emotion setter 113, an action controller 114, and an emotion changer 115.

The amount of change learner 111 learns and stores an emotion change parameter (emotion change data 122, described later) in accordance with the external stimulus detected by the external stimulus detector 210. The emotion change parameter is a parameter for changing the pseudo-emotion of the robot 200. Specifically, the amount of change learner 111 increases/decreases the emotion change data 122 in accordance with the external stimulus by robot control processing, described later.

The amount of change acquirer 112 acquires, in accordance with the detected external stimulus, the emotion change parameter (the emotion change data 122) learned by the amount of change learner 111. The amount of change acquirer 112 is described in detail later.

The emotion setter 113 sets, in accordance with the emotion change parameter (the emotion change data 122) acquired by the amount of change acquirer 112, an emotion parameter (emotion data 121, described later) expressing the pseudo-emotion of the robot 200. The emotion setter 113 is described in detail later.

The action controller 114 controls the actions of the robot 200 in accordance with the external stimulus detected by the external stimulus detector 210. The action controller 114 is described in detail later.

The emotion changer 115 executes emotion change processing, described later, to change the pseudo-emotion of the robot 200 in a step-wise manner when the external stimulus acting on the robot 200 is not detected in a predetermined period. The emotion changer 115 is described in detail later.

The storage 120 is configured from read-only memory (ROM), flash memory, random access memory (RAM), or the like. Programs to be executed by the CPU of the controller 110, and data needed in advance to execute these programs are stored in the ROM. The flash memory is writable non-volatile memory, and stores data that is desired to be retained even after the power is turned OFF. Data that is created or modified during the execution of the programs is stored in the RAM.

The external stimulus detector 210 includes the touch sensor 211, the acceleration sensor 212, the gyrosensor 213, and the microphone 214 described above. The controller 110 acquires, as external stimulus data, detection values detected by the various sensors of the external stimulus detector 210. The external stimulus data expresses the external stimulus acting on the robot 200. Note that a configuration is possible in which the external stimulus detector 210 includes sensors other than the touch sensor 211, the acceleration sensor 212, the gyrosensor 213, and the microphone 214. The types of external stimuli acquirable by the controller 110 can be increased by increasing the types of sensors of the external stimulus detector 210.

The touch sensor 211 detects contacting by some sort of object. The touch sensor 211 is configured from a pressure sensor or a capacitance sensor, for example. A detection value detected by the touch sensor 211 expresses the strength of contact. Additionally, the touch sensor 211 is capable of directional contact detection, and detects the strength of contact in three axial directions, namely contact from the front-back direction (the X-axis direction), contact from a width (left-right) direction (Y-axis direction), and contact from a vertical direction (Z-axis direction) of the torso 206 of the robot 200. Therefore, the detection value of the touch sensor 211 is three-dimensional data constituted by values of the strength of contact from the X-axis direction, the strength of contact from the Y-axis direction, and the strength of contact from the Z-axis direction. The controller 110 can, on the basis of the detection value from the touch sensor 211, detect that the robot 200 is being pet, is being struck, and the like by the user.

The acceleration sensor 212 detects acceleration in three axial directions, namely the front-back direction (X-axis direction), the width (left-right) direction (Y-axis direction), and the vertical direction (Z direction) of the torso 206 of the robot 200. Therefore, the acceleration value detected by the acceleration sensor 212 is three-dimensional data constituted by values of X-axis direction acceleration, Y-axis direction acceleration, and Z-axis direction acceleration. The acceleration sensor 212 detects gravitational acceleration when the robot 200 is stopped and, as such, the controller 110 can detect a current attitude of the robot 200 on the basis of the gravitational acceleration detected by the acceleration sensor 212. Additionally, when, for example, the user picks up or throws the robot 200, the acceleration sensor 212 detects, in addition to the gravitational acceleration, acceleration caused by the movement of the robot 200. Accordingly, the controller 110 can detect the movement of the robot 200 by removing the gravitational acceleration component from the detection value detected by the acceleration sensor 212.

The gyrosensor 213 detects an angular velocity from when rotation is applied to the torso 206 of the robot 200. Specifically, the gyrosensor 213 detects the angular velocity on three axes of rotation, namely rotation around the front-back direction (the X-axis direction), rotation around the width (left-right) direction (the Y-axis direction), and rotation around the vertical direction (the Z-axis direction) of the torso 206. Therefore, an angular velocity value detected by the gyrosensor 213 is three-dimensional data constituted by the values of X-axis rotation angular velocity, Y-axis rotation angular velocity, and Z-axis rotation angular velocity. The controller 110 can more accurately detect the movement of the robot 200 by combining the detection value detected by the acceleration sensor 212 and the detection value detected by the gyrosensor 213.

Note that the touch sensor 211, the acceleration sensor 212, and the gyrosensor 213 are synchronized, detect each of the strength of contact, the acceleration, and the angular velocity at the same timing, and output the detection values to the controller 110 at the same timing. Specifically, the touch sensor 211, the acceleration sensor 212, and the gyrosensor 213 detect the strength of contact, the acceleration, and the angular velocity at the same timing every 0.25 seconds, for example.

The microphone 214 detects ambient sound of the robot 200. The controller 110 can, for example, detect, on the basis of a component of the sound detected by the microphone 214, that the user is speaking to the robot 200, that the user is clapping their hands, and the like.

The driver 220 includes the twist motor 221 and the vertical motor 222. The driver 220 is driven by the controller 110. As a result, the robot 200 can express actions such as, for example, lifting the head 204 up (rotating upward around the second rotational axis), twisting the head 204 sideways (twisting/rotating to the right or to the left around the first rotational axis), and the like. Motion data for driving the driver 220 in order to express these actions is recorded in a control content table 123, described later.

The sound outputter 230 includes the speaker 215, and sound is output from the speaker 215 as a result of sound data being input into the sound outputter 230 by the controller 110. For example, the robot 200 emits a pseudo-animal sound as a result of the controller 110 inputting animal sound data of the robot 200 into the sound outputter 230. This animal sound data is also recorded as sound effect data in the control content table 123.

In one example, the operation inputter 240 is configured from an operation button, a volume knob, or the like. The operation inputter 240 is an interface for receiving user operations such as, for example, turning the power ON/OFF, adjusting the volume of the output sound, and the like.

The power supply controller 250 includes a sub-microcomputer, a charging integrated circuit (IC), a power supply control IC, the power receiver 251, and the like, and performs charging of the battery 252 of the robot 200, acquiring of a remaining amount of the battery 252, and power supply controlling of the robot 200.

Next, of the data stored in the storage 120 of the apparatus control device 100, the data unique to the present embodiment, namely, the emotion data 121, the emotion change data 122, the control content table 123, leave-alone time data 124, and an amount of change table 125 are described in order.

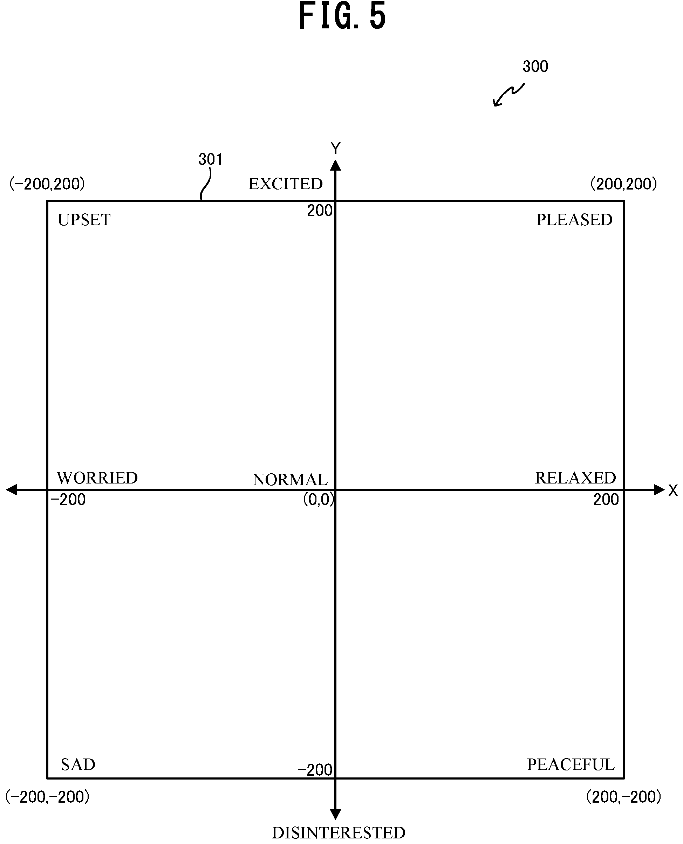

The emotion data 121 is data for imparting pseudo-emotions to the robot 200, and is data (X, Y) that represents coordinates on an emotion map 300. As illustrated in FIG. 5, the emotion map 300 is expressed by a two-dimensional coordinate system with a degree of relaxation (degree of worry) axis as an X axis, and a degree of excitement (degree of disinterest) axis as a Y axis. An origin (0, 0) on the emotion map 300 represents an emotion when normal. The phrase "emotion when normal" refers to a neutral emotion at a time of the first start-up of the robot 200 after shipping from the factory. As the value of the X coordinate (X value) on the emotion map 300 is positive and the absolute value thereof increases, emotions for which the degree of relaxation is high are expressed and, as the value of the Y coordinate (Y value) on the emotion map 300 is positive and the absolute value thereof increases, emotions for which the degree of excitement is high are expressed. Additionally, as the X value is negative and the absolute value thereof increases, emotions for which the degree of worry is high are expressed and, as the Y value is negative and the absolute value thereof increases, emotions for which the degree of disinterest is high are expressed.

The emotion data 121 has two values, namely the X value (degree of relaxation, degree of worry) and the Y value (degree of excitement, degree of disinterest) that express a plurality (in the present embodiment, four) of mutually different pseudo-emotions, and points on the emotion map 300 represented by the X value and the Y value represent the pseudo-emotions of the robot 200. An initial value of the emotion data 121 is (0, 0). The emotion data 121 is a parameter expressing the pseudo-emotion of the robot 200 and, as such, is also called an "emotion parameter." Note that, in FIG. 5, the emotion map 300 is expressed as a two-dimensional coordinate system, but the number of dimensions of the emotion map 300 may be set as desired. For example, a configuration is possible in which the emotion map 300 is defined by one dimension, and one value is set as the emotion data 121. Additionally, a configuration is possible in which another axis is added and the emotion map 300 is defined by three or more dimensions, and a number of values corresponding to the number of dimensions of the emotion map 300 are set as the emotion data 121.

In the present embodiment, regarding the size of the emotion map 300, as illustrated by frame 301 of FIG. 5, a maximum value of both the X value and the Y value is 200 and a minimum value is -200. The X value and the Y value of the emotion data 121 cannot be set outside of the frame 301.

Returning to FIG. 4, the emotion change data 122 is data that sets an amount of change that each of the X value and the Y value of the emotion data 121 is increased or decreased. In the present embodiment, as emotion change data 122 corresponding to the X of the emotion data 121, DXP that increases the X value and DXM that decreases the X value are provided and, as emotion change data 122 corresponding to the Y value of the emotion data 121, DYP that increases the Y value and DYM that decreases the Y value are provided. Specifically, the emotion change data 122 includes the following four variables. These variables are parameters that change the pseudo-emotion of the robot 200 and, as such, are also called "emotion change parameters."
DXP: Tendency to relax (tendency to change in the positive value direction of the X value on the emotion map)
DXM: Tendency to worry (tendency to change in the negative value direction of the X value on the emotion map)
DYP: Tendency to be excited (tendency to change in the positive value direction of the Y value on the emotion map)
DYM: Tendency to be disinterested (tendency to change in the negative value direction of the Y value on the emotion map)

In the present embodiment, an example is described in which the initial value of each of these variables is set to 10 and, during robot control processing, described later, the value increases to a maximum of 20 by processing for learning emotion change data. Due to this learning processing, the emotion change data 122, that is, the degree of change of emotion changes and, as such, the robot 200 assumes various personalities in accordance with the manner in which the user interacts with the robot 200. That is, the personality of each individual robot 200 is formed differently on the basis of the manner in which the user interacts with the robot 200.

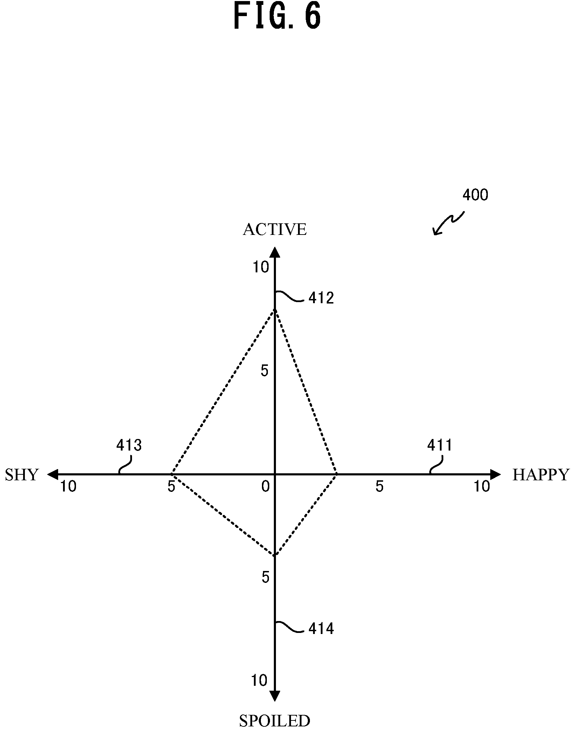

In the present embodiment, each piece of personality data (personality value) is derived by subtracting 10 from each piece of emotion change data 122. Specifically, a value obtained by subtracting 10 from DXP that expresses a tendency to be relaxed is set as a personality value (happy), a value obtained by subtracting 10 from DXM that expresses a tendency to be worried is set as a personality value (shy), a value obtained by subtracting 10 from DYP that expresses a tendency to be excited is set as a personality value (active), and a value obtained by subtracting 10 from DYM that expresses a tendency to be disinterested is set as a personality value (spoiled). As a result, for example, as illustrated in FIG. 6, it is possible to generate a personality value radar chart 400 by plotting each of the personality value (happy) on axis 411, the personality value (active) on axis 412, the personality value (shy) on axis 413, and the personality value (spoiled) on axis 414. Thus, the values of the emotion change parameters (emotion change data 122) can be said to express the pseudo personality of the robot 200.

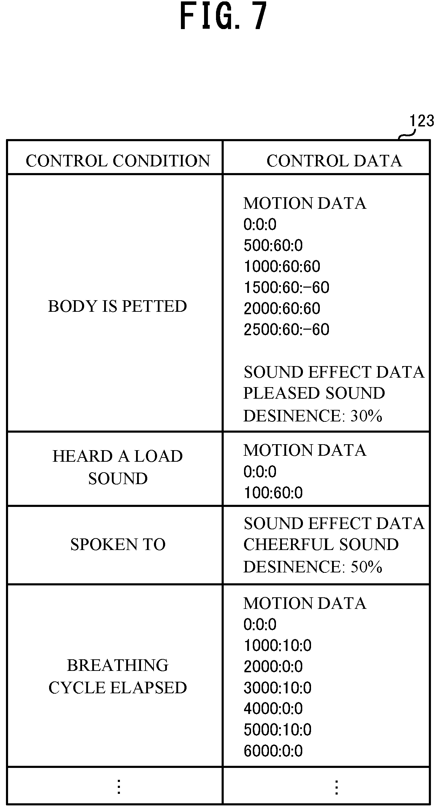

As illustrated in FIG. 7, control conditions and control data are associated and stored in the control content table 123. When a control condition is satisfied (for example, some sort of external stimulus is detected), the controller 110 controls the driver 220 and the sound outputter 230 on the basis of the corresponding control data (motion data for expressing an action by the driver 220, and sound effect data for outputting a sound effect from the sound outputter 230).

As illustrated in FIG. 7, the motion data is a series of sequence data for controlling the driver 220 (arranged as "Time (ms) : Rotational angle (degree) of vertical motor 222 : Rotational angle (degree) of twist motor 221"). For example, when the body is petted, the controller 110 and the driver 220 are controlled so that, firstly (at 0 sec), the rotational angles of the vertical motor 222 and the twist motor 221 are set to 0 degrees (vertical reference angle and twist reference angle), at 0.5 sec, the head 204 is raised so that the rotational angle of the vertical motor 222 becomes 60 degrees, and at 1 sec, the head 204 is twisted so that the rotational angle of the twist motor 221 becomes 60 degrees.

Regarding the sound effect data, to facilitate ease of understanding, text describing each piece of the sound effect data is included in FIG. 7, but in actuality, the sound effect data (sampled sound data) described by the text itself is stored in the control content table 123 as the sound effect data. Additionally, a value representing a desinence position is included in the sound effect data (for example, "Desinence: 30%"). This value is obtained by expressing the desinence position as a percentage from the beginning of the length of the entire sound effect data, and is used when changing a tone of a sound effect (changing the frequency of the desinence) in control data change/playback processing, described later.

Note that, in the control content table 123 illustrated in FIG. 7, a condition related to emotion (expressed by the coordinates on the emotion map 300) is not included in the control conditions, but a configuration is possible in which a condition related to emotion is included in the control conditions, and the control data is changed in accordance with the emotion.

Returning to FIG. 4, the leave-alone time data 124 is data expressing an amount of time (leave-alone time) that the robot 200 has been left alone. In the present embodiment, an amount of time that the external stimulus acting on the robot 200 is not detected is measured as the leave-alone time, and the leave-alone time is reset to 0 when the external stimulus is detected.

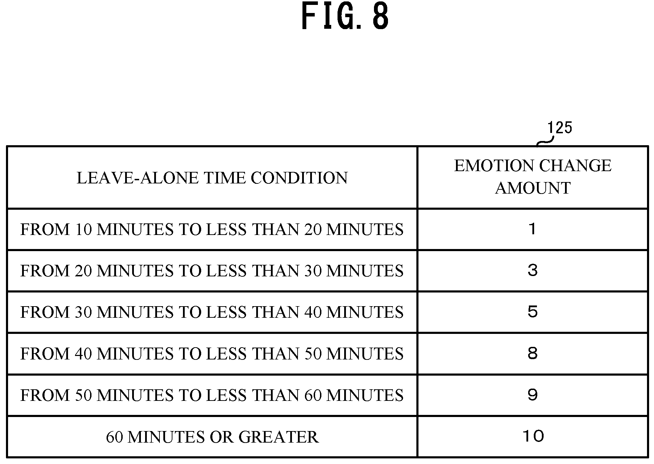

As illustrated in FIG. 8, leave-alone time conditions and emotion change amounts are associated and stored in the amount of change table 125. Here, the "emotion change amount" corresponds to a distance on the emotion map 300. When the leave-alone time of the robot 200 satisfies a leave-alone time condition, the controller 110 (the emotion changer 115) changes the emotion data in accordance with the corresponding emotion change amount. Specifically, the controller 110 changes, in a specific direction, the coordinates (X, Y) on the emotion map 300 expressed in the emotion data 121 a distance expressed by the corresponding emotion change amount. As illustrated in FIG. 8, values of the amount of change table 125 are set such that the emotion change amount increases as the leave-alone time increases.

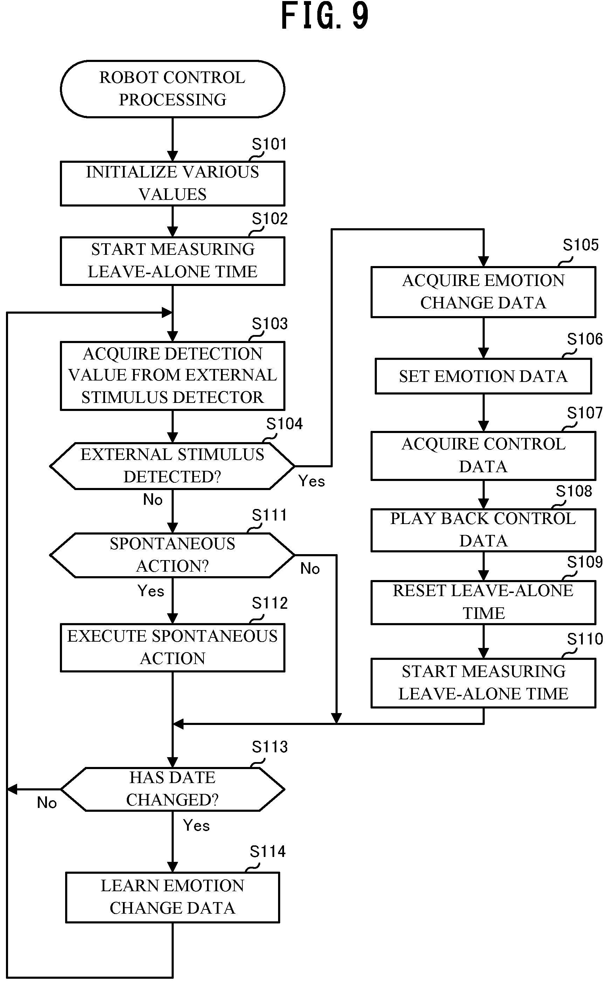

Next, the robot control processing executed by the controller 110 of the apparatus control device 100 is described while referencing the flowchart illustrated in FIG. 9. The robot control processing is processing in which the apparatus control device 100 controls the actions, sound, and the like of the robot 200 on the basis of the detection values from the external stimulus detector 210 or the like. The robot control processing starts when the user turns ON the power of the robot 200.

Firstly, the controller 110 initializes the various types of data such as the emotion data 121, the emotion change data 122, and the like (step S101). Note that, a configuration is possible in which, for the second and subsequent startups of the robot 200, the various values from when the power of the robot 200 was last turned OFF are set in step S101. This can be realized by the controller 110 storing the various data values in nonvolatile memory (flash memory or the like) of the storage 120 when an operation for turning the power OFF is performed the last time and, when the power is thereafter turned ON, setting the stored values as the various data values.

Then, the controller 110 starts measuring the leave-alone time using the clock function (step S102). The leave-alone time is continuously measured until the leave-alone time is reset by step S109, described later.

Next, the controller 110 acquires the detection value detected by the external stimulus detector 210 (step S103). Then, the controller 110 determines, on the basis of the acquired detection value, whether there is an external stimulus (step S104).

When there is an external stimulus (step S104; Yes), the controller 110 (the amount of change acquirer 112) acquires the emotion change data 122 in accordance with the detection value of the external stimulus acquired in step S103 (step S105). Specifically, when, for example, petting of the head 204 is detected by the touch sensor 211 of the head 204 as the external stimulus, the robot 200 obtains a pseudo sense of relaxation and, as such, the controller 110 acquires DXP as the emotion change data 122 to be added to the X value of the emotion data 121.

Then, the controller 110 (the emotion setter 113) sets the emotion data 121 in accordance with the emotion change data 122 acquired in step S105 (step S106). Specifically, when, for example, DXP is acquired as the emotion change data 122 in step S104, the controller 110 adds the DXP of the emotion change data 122 to the X value of the emotion data 121.

In steps S105 and S106, any type of settings are possible for the type of emotion change data 122 acquired and the emotion data 121 set for each individual external stimulus. Examples are described below.

The head 204 is petted (relax): X = X+DXP
The head 204 is struck (worry): X = X-DXM
   (these external stimuli can be detected by the touch sensor 211 of the head 204)
The torso 206 is petted (excite): Y = Y+DYP
The torso 206 is struck (disinterest): Y = Y-DYM
   (these external stimuli can be detected by the touch sensor 211 of the torso 206)
Held with head upward (pleased): X = X+DXP, and Y = Y+DYP
Suspended with head downward (sad): X = X-DXM, and Y = Y-DYM
   (these external stimuli can be detected by the touch sensor 211, the acceleration sensor 212, and the gyrosensor 213)
Spoken to in kind voice (peaceful): X = X+DXP, and Y = Y-DYM
Yelled out in loud voice (upset): X = X-DXM, and Y = Y+DYP
   (these external stimuli can be detected by the microphone 214)

However, in a case in which a value (X value, Y value) of the emotion data 121 exceeds the maximum value of the emotion map 300 when adding the emotion change data 122, that value of the emotion data 121 is set to the maximum value of the emotion map 300. In addition, in a case in which a value of the emotion data 121 is less than the minimum value of the emotion map 300 when subtracting the emotion change data 122, that value of the emotion data 121 is set to the minimum value of the emotion map 300.

Next, the controller 110 (the action controller 114) references the control content table 123 and acquires the control data corresponding to the control condition that is satisfied by the acquired detection value of the external stimulus (step S107).

Then, the controller 110 (the action controller 114) plays back the control data acquired in step S107 (step S108). Note that a configuration is possible in which the controller 110 adjusts (changes), on the basis of the emotion data 121, the content of the control data to be played back.

Next, the controller 110 resets the leave-alone time to 0 (step S109), and starts measuring the leave-alone time (step S110). Then, the controller 110 executes step S113.

Meanwhile, when there is not an external stimulus in step S104 (step S104; No), the controller 110 determines whether to perform a spontaneous action (a breathing imitation action that is an action resembling breathing of a creature, or the like) (step S111). Any method may be used as the method for determining whether to perform the spontaneous action but, in the present embodiment, it is assumed that the determination of step S111 is "Yes" and the breathing imitation action is performed every breathing cycle (for example, two seconds).

When not performing the spontaneous action (step S111; No), the controller 110 executes step S113. When performing the spontaneous action (step S111; Yes), the controller 110 executes a spontaneous action (for example, a breathing action) as the spontaneous action (step S112), and executes step S113.

The control data of this spontaneous action also is stored in the control content table 123 (such as illustrated in, for example, "breathing cycle elapsed" of the "control conditions" of FIG. 7). Note that a configuration is possible in which the control content of the spontaneous action is adjusted (changed) on the basis of the emotion data 121.

In step S113, the controller 110 uses the clock function to determine whether a date has changed. When the date has not changed (step S113; No), the controller 110 executes step S103.

When the date has changed (step S113; Yes), the controller 110 (the amount of change learner 111) performs learning of the emotion change data 122 (step S114), and executes step S103. The learning of the emotion change data 122 is, specifically, processing for updating the emotion change data 122 by adding 1 to the DXP of the emotion change data 122 when the X value of the emotion data 121 is set to the maximum value of the emotion map 300 even once in step S106 of that day, adding 1 to the DYP of the emotion change data 122 when the Y value of the emotion data 121 is set to the maximum value of the emotion map 300 even once in step S106 of that day, adding 1 to the DXM of the emotion change data 122 when the X value of the emotion data 121 is set to the minimum value of the emotion map 300 even once in step S106 of that day, and adding 1 to the DYM of the emotion change data 122 when the Y value of the emotion data 121 is set to the minimum value of the emotion map 300 even once in step S106 of that day.

However, when the various values of the emotion change data 122 become exceedingly large, the amount of change of one time of the emotion data 121 becomes exceedingly large and, as such, the maximum value of the various values of the emotion change data 122 is set to 20, for example, and the various values are limited to that maximum value or less. Here, 1 is added to each piece of the emotion change data 122, but the value to be added is not limited to 1. For example, a configuration is possible in which a number of times at which the various values of the emotion data 121 are set to the maximum value or the minimum value of the emotion map 300 is counted and, when that number of times is great, the numerical value to be added to the emotion change data 122 is increased.

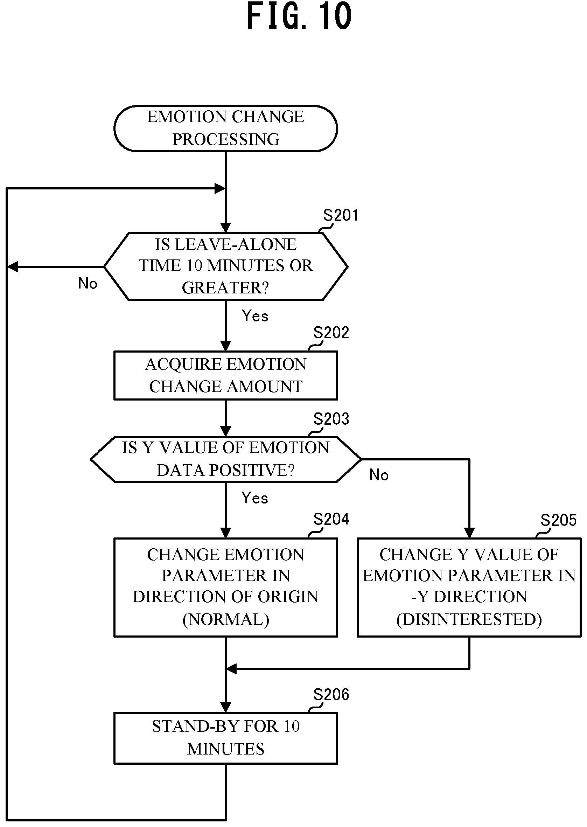

Next, emotion change processing executed by the controller 110 (the emotion changer 115) of the apparatus control device 100 is described while referencing the flowchart illustrated in FIG. 10. The emotion change processing is processing that, while the power of the robot 200 is turned ON, is executed in parallel in a separate thread with the robot control processing described above. As a result of the emotion change processing, the emotion data set in step S106 of the robot control processing changes automatically in accordance with the leave-alone time.

Firstly, the controller 110 references the leave-alone time data 124 and determines whether the current leave-alone time is 10 minutes or greater (step S201). When the leave-alone time is less than 10 minutes (step S201; No), the controller 110 stands-by without executing the subsequent steps.

When the leave-alone time is 10 minutes or greater (step S201; Yes), the controller 110 references the amount of change table 125 illustrated in FIG. 8, and acquires the emotion change amount corresponding to the leave-alone time condition satisfied by the current leave-alone time (step S202). For example, when the leave-alone time is 10 minutes, "1" is acquired as the emotion change amount.

Returning to FIG. 10, next, the controller 110 determines whether the Y coordinate value (Y value) on the emotion map 300 expressed by the emotion data 121 is positive (greater than 0) (step S203). The determination of step S203 corresponds to determining whether the robot 200 is in an excited state.

When the Y value of the emotion data 121 is a positive value (step S203; Yes), that is, when the robot 200 is in an excited state, the controller 110 changes the values (X, Y) on the emotion map 300 expressed by the emotion data 121 in a direction toward the origin (0, 0) a distance corresponding to the emotion change amount acquired in step S202 (step S204), and executes step S206. As a result of this processing, the pseudo-emotion of the robot 200 that is in the excited state changes so as to become a neutral emotion, and the robot 200 appears to be in a calm state.

Meanwhile, when the Y value of the emotion data 121 is not a positive value (step S203; No), the controller 110 changes the values (X, Y) on the emotion map 300 in a direction (negative direction) in which that Y value decreases a distance corresponding to the emotion change amount acquired in step S202 (step S205), and executes step S206. As a result of this processing, the pseudo-emotion of the robot 200 changes so as to become disinterested, and the robot 200 appears to be in a calm state.

In step S206, the controller 110 stands-by for 10 minutes. Then, the controller 110 executes step S201.

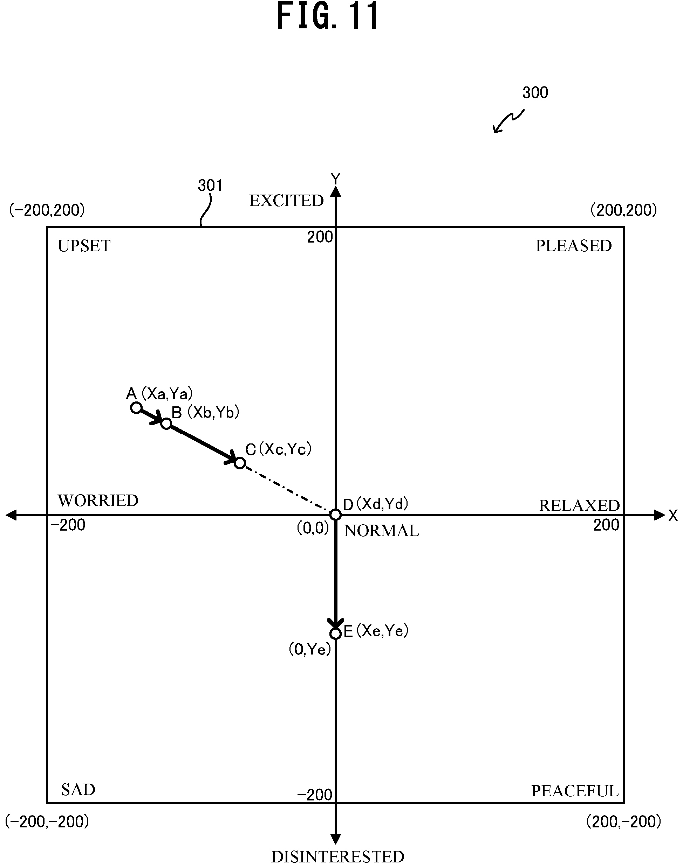

Next, examples of the change in the emotion data 121 resulting from the emotion change processing described above are described. For example, as illustrated in FIG. 11, a case is considered in which 10 minutes elapses without the external stimulus acting on the robot 200 in a state in which the emotion data 121 of the robot 200 is set to the coordinates illustrated at point A (Xa, Ya). In this case, Ya is a positive value and, as such, the processing of step S204 is executed, and the emotion data 121 changes to a point B (Xb, Yb) that is a distance 1 separated from the point A in the direction from the point A toward the origin (0, 0).

Then, when left alone for another 10 minutes (when left alone for a total of 20 minutes), Yb is a positive value and, as such, the processing of step S204 is executed again, and the emotion data 121 changes to a point C (Xc, Yc) that is a distance 3 separated from the point B in the direction from the point B toward the origin (0, 0). This means that the pseudo-emotion of the robot 200 is changing, in a step-wise manner, to the state of the time of the first start-up.

Thereafter, every time 10 minutes of the leave-alone time elapses, the emotion data 121 for which the Y value is positive changes in the direction of the origin, and the emotion data 121 changes until reaching the point D (Xd = 0, Yd = 0). Then, when the robot 200 is left alone in this state for another 10 minutes, Yd is not a positive value and, as such, the processing of step S205 is executed, and the emotion data 121 changes from the point D to the point E (Xe = 0, Ye) in the negative direction along the Y axis. Then, every time 10 minutes elapses without the external stimulus being detected, the Y value of the emotion data 121 changes in a step-wise manner in the negative direction. This means that the pseudo-emotion of the robot 200 is lost, and the robot 200 changes in a step-wise manner such that the appearance and actions of the robot 200 seem to become disinterested.

As described above, when the external stimulus is not detected in the predetermined period, the apparatus control device 100 according to the present embodiment changes, in a step-wise manner, the emotion data 121 (the emotion parameter) expressing the pseudo-emotion of the robot 200. That is, even in a case such as when the user leaves the robot 200 alone, the pseudo-emotion of the robot 200 changes and, as such, it is possible to express more lifelike emotions, and it is possible to appropriately generate the pseudo-emotion.

Additionally, when the apparatus control device 100 according to the present embodiment determines that the degree of excitement (the Y value) expressed by the emotion data 121 is a positive value, that is, that the robot 200 tends to be excited (when the pseudo-emotion is close to the predetermined state), the apparatus control device 100 changes the emotion data 121 in the direction toward the origin on the emotion map 300, that is, changes the emotion data 121 so as to become the emotion of the time of the first start-up. Moreover, when the apparatus control device 100 according to the present embodiment determines that the degree of excitement (the Y value) expressed by the emotion data 121 is not a positive value, that is, that the robot 200 tends to be disinterested (when the pseudo-emotion is close to the predetermined state), the apparatus control device 100 changes the emotion data 121 in the negative direction along the Y axis of the emotion map 300, that is, changes the emotion data 121 so as to become more disinterested. By changing in this manner, it is possible to provide a robot 200 that becomes calm and gradually more and more composed as a result of being left alone, that can express emotion such as becoming disinterested, and that demonstrates emotions similar to a real creature or pet.

With the apparatus control device 100 according to the present embodiment, the amount of change table 125 (FIG. 8) is set such that the quantity of the emotion parameter (the emotion change amount) that is changed in a step-wise manner increases as the period (the leave-alone time) in which the external stimulus is not detected increases. Due to this, the emotion hardly changes at the initial stage of being left alone, but the emotion changes more and more as time elapses and, as such, the expression of more lifelike emotions can be realized.

### Modified Examples

The present disclosure is not limited to the embodiment described above, and various modifications and uses are possible. For example, in the embodiment described above, the quantity of the emotion data that is changed in a step-wise manner is determined using the amount of change table 125 illustrated in FIG. 8. That is, the robot 200 is controlled such that the emotion data 121 changes greater as the leave-alone time increases. However, the manner in which the emotion data 121 is changed is not limited thereto.

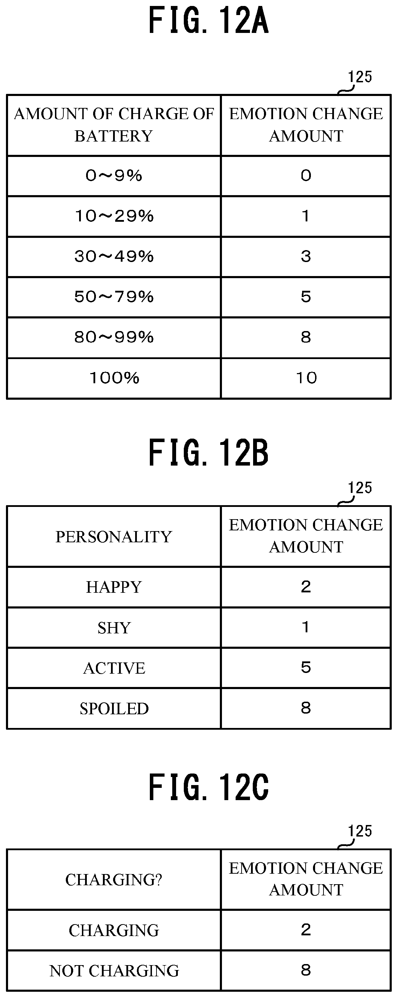

For example, a configuration is possible in which the quantity of the emotion data 121 that is changed in a step-wise manner is changed on the basis of an amount of charge of the battery 252 of the robot 200. In such a case, the amount of change table 125 illustrated in FIG. 12A, instead of that illustrated in FIG. 8, is stored in the storage 120. Moreover, in step S202 of the emotion change processing, it is sufficient that the controller 110 acquires the emotion change amount by referencing the amount of change table 125 illustrated in FIG. 12A. In the amount of change table 125 illustrated in FIG. 12A, the emotion change amount is set to increase as the amount of charge of the battery 252 increases. Due to this, it is possible to express lifelikeness such as the emotions changing in a greater manner as the energy level (the amount of charge) of the robot 200 increases.

For example, a configuration is possible in which the quantity of the emotion data 121, that is changed in a step-wise manner, is changed on the basis of the pseudo personality of the robot 200 expressed by the emotion change data 122. In such a case, for example, the amount of change table 125 illustrated in FIG. 12B, instead of that illustrated in FIG. 8, is stored in the storage 120. Moreover, in step S202 of the emotion change processing, it is sufficient that the controller 110 acquires the emotion change amount by referencing the amount of change table 125 illustrated in FIG. 12B. Note that whether the personality of the robot 200 is happy, shy, active, or spoiled can be determined from the personality value radar chart 400 (FIG. 6) described above. In the amount of change table 125 illustrated in FIG. 12B, in the case of a spoiled personality, the emotion change amount is set greater than for other personalities. As a result, when the robot 200 is ignored and left alone, the emotions immediately change greatly, and emotion changes reflecting a spoiled personality can be realized.

For example, a configuration is possible in which the quantity of the emotion data 121, that is changed in a step-wise manner, is changed on the basis of whether the battery 252 of the robot 200 is being charged. In such a case, for example, the amount of change table 125 illustrated in FIG. 12C, instead of that illustrated in FIG. 8, is stored in the storage 120. Moreover, in step S202 of the emotion change processing, it is sufficient that the controller 110 acquires the emotion change amount by referencing the amount of change table 125 illustrated in FIG. 12C.

Note that a configuration is possible in which the conditions described above are combined to determine the quantity of the emotion data 121 that is changed in a step-wise manner. For example, a configuration is possible in which, in step S202 of the emotion change processing, the controller 110 references the various amount of change tables 125 illustrated in FIGS. 8, and 12A to 12C to calculate a sum value or an average value of the emotion change amounts matching the various conditions and, in step S204 or S205, the controller 110 changes the emotion data 121 a distance corresponding to the calculated value.

In the embodiment described above, when the external stimulus is not detected in the predetermined period, the emotion data 121 is changed in the direction toward the origin when the degree of excitement (the Y value) expressed by the emotion data 121 is a positive value, and is changed in the negative direction along the Y axis when the degree of excitement (the Y value) is not a positive value. However, the directions in which the emotion data 121 is changed in a step-wise manner are not limited thereto. For example, a configuration is possible in which the emotion data 121 is changed in a step-wise manner in a direction in which the degree of relaxation (the X value) becomes negative. Additionally, a configuration is possible in which the emotion data 121 is changed in a random direction every 10 minutes.

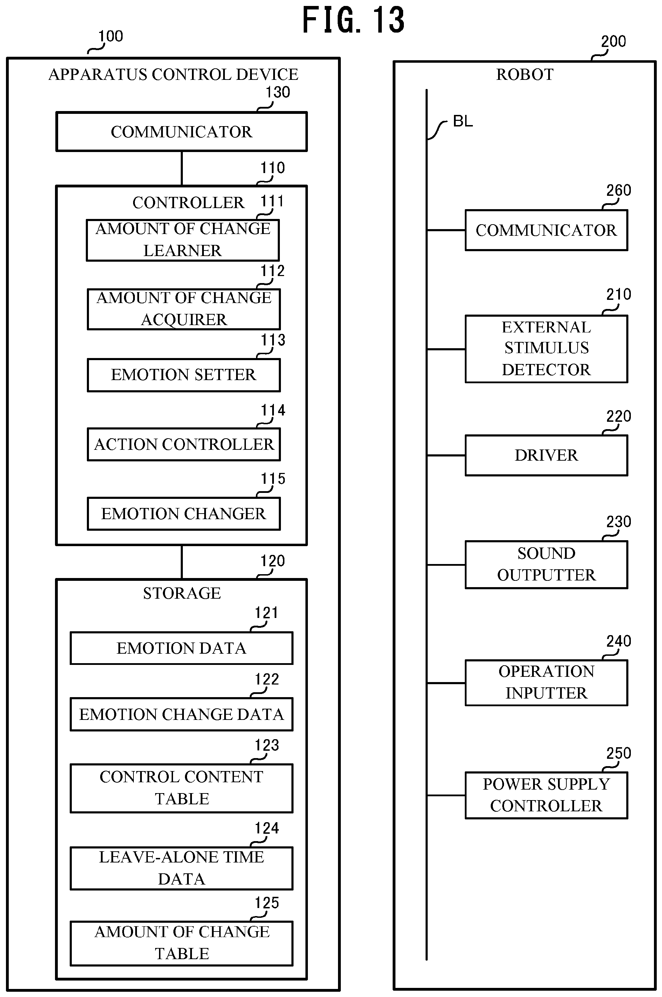

In the embodiments described above, a configuration is described in which the apparatus control device 100 is built into the robot 200, but a configuration is possible in which the apparatus control device 100 is not built into the robot 200. For example, a configuration is possible in which, as illustrated in FIG. 13, the apparatus control device 100 according to a modified example is not built into the robot 200, and is configured as a separate device (for example, a server). In this modified example, the apparatus control device 100 includes a communicator 130, the robot 200 includes a communicator 260, and the communicator 130 and the communicator 260 are configured so as to be capable of exchanging data with each other. Moreover, the controller 110 acquires, via the communicator 130 and the communicator 260, the external stimulus detected by the external stimulus detector 210, and controls the driver 220 and the sound outputter 230 via the communicator 130 and the communicator 260.

In the embodiments described above, the apparatus control device 100 is a control device that controls the robot 200. However, the apparatus to be controlled is not limited to the robot 200. Examples of the apparatus to be controlled include a wristwatch, and the like. For example, in the case of an apparatus that controls a wristwatch that is capable of outputting sound and that includes an acceleration sensor and a gyrosensor, impacts or the like applied to the wristwatch and detected by the acceleration sensor and the gyrosensor can be envisioned as the external stimulus. Additionally, it is expected that the emotion change data 122 and the emotion data 121 are updated in accordance with this external stimulus, and the sound effect data set in the control content table 123 is adjusted (changed) on the basis of the emotion data 121 from the point in time at which the user wears the wristwatch, and outputted.

Accordingly, a configuration is possible in which, when the wristwatch is being handled roughly, a sad-like sound effect is emitted when the user puts the wristwatch on, and when the wristwatch is being handled with care, a pleased sound effect is emitted when the user is puts the wristwatch on. Furthermore, by executing the same emotion change processing in such a wristwatch, the pseudo-emotion can be changed when the user leaves the wristwatch alone and does not use the wristwatch for an extended amount of time.

Thus, the apparatus control device 100 is not limited to a robot and can be applied to various apparatuses, and can provide the applied apparatus with pseudo-emotions, a personality, and the like. Furthermore, the apparatus control device 100 can be applied to various apparatuses to cause a user to feel as if they are pseudo-raising that apparatus.

In the embodiments described above, a description is given in which the action programs executed by the CPU of the controller 110 are stored in advance in the ROM or the like of the storage 120. However, the present disclosure is not limited thereto, and a configuration is possible in which the action programs for executing the various processings described above are installed on an existing general-purpose computer or the like, thereby causing that computer to function as a device corresponding to the apparatus control device 100 according to the embodiments described above.

Any method can be used to provide such programs. For example, the programs may be stored and distributed on a non-transitory computer-readable recording medium (flexible disc, Compact Disc (CD)-ROM, Digital Versatile Disc (DVD)-ROM, Magneto Optical (MO) disc, memory card, USB memory, or the like), or may be provided by storing the programs in a storage on a network such as the internet, and causing these programs to be downloaded.

Additionally, in cases in which the processings described above are realized by being divided between an operating system (OS) and an application/program, or are realized by cooperation between an OS and an application/program, it is possible to store only the portion of the application/program on the non-transitory recording medium or in the storage. Additionally, the programs can be piggybacked on carrier waves and distributed via a network. For example, the programs may be posted to a bulletin board system (BBS) on a network, and distributed via the network. Moreover, a configuration is possible in which the processings described above are executed by starting these programs and, under the control of the operating system (OS), executing the programs in the same manner as other applications/programs.

The foregoing describes some example embodiments for explanatory purposes. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

## Claims

1. An apparatus control method to be executed by a controller (110) of an apparatus (200), the method comprising:
setting (S106), in accordance with an external stimulus acting on the apparatus, an emotion parameter (121) expressing a pseudo-emotion;
the emotion parameter (121) expresses a pseudo-emotion by a position on an emotion map (300), wherein
the emotion map (300) has a first axis indicating a degree of excitement and a second axis indicating the degree of an emotion other than excitement; and
the emotion map (300) includes a first area indicating a degree of more excitement and a second area indicating a degree of less excitement; and **characterised in that** the method further comprises:
determining (S203) whether the set emotion parameter (121) is in the first area of the emotion map (300) or in the second area of the emotion map (300); and
controlling (S201 - 205) so as (i) to move the set emotion parameter (121) towards a predetermined position indicating a neutral emotion on the emotion map (300), when the set emotion parameter (121) is in the first area and, also, the external stimulus is not detected in a predetermined period of time, and (ii) to move the set emotion parameter (121) on the emotion map (300) in a direction of decreasing excitement, when the set emotion parameter (121) is in the second area and, also, the external stimulus is not detected in a predetermined period of time.

2. The apparatus control method according to claim 1, wherein
the neutral position represents a calm state on the emotion map (300);
the calm state indicates a shift toward a less-excited state; and
the first area is an area representing that the apparatus (200) is not in the calm state.

3. The apparatus control method according to claim 1, wherein
the neutral emotion indicates the origin in the emotion map (300); and
the controlling (S201 - S205) includes
changing (S204) the set emotion parameter (121) in a step-wise manner so that the set emotion parameter (121) approaches the neutral emotion, when it is determined that the set emotion parameter (121) is in the first area and, also, the external stimulus is not detected in the predetermined period.

4. The apparatus control method according to any of claims 1 to 3 wherein the controlling includes
changing (S204) a quantity of the set emotion parameter (121) that is changed based on a period in which the external stimulus is not detected.

5. The apparatus control method according to any of claims 1 to 3, wherein the controlling includes
changing (S106) a quantity of the set emotion parameter (121) that is changed based on a pseudo personality of the apparatus (200).

6. The apparatus control method according to any claims 1 to 3, wherein the controlling includes
changing an amount of change of the set emotion parameter (121) in accordance with an amount of charge of a battery (252) included in the apparatus (200).

7. The apparatus control method according to any of claims 1 to 3, wherein the controlling includes
changing an amount of change of the set emotion parameter (121) based on whether charging of a battery (252) included in the apparatus (200) is being performed.

8. An apparatus (200) comprising:
a controller (110) adapted to perform the control method of any of claims 1 to 5.

9. The apparatus (200) according to claim 8, further comprising:
a battery (252); wherein
the controller (110) is adapted to change an amount of change of the set emotion parameter (121) in accordance with an amount of charge of the battery (252).

10. The apparatus (200) according to claim 8, further comprising:
a battery (252); wherein
the controller (110) is adapted to change an amount of change of the set emotion parameter (121) based on whether charging of the battery (252) is being performed.

11. A program readable by a computer of an apparatus (200), the program causing the computer to execute the steps of the control method according to any of claims 1 to 7.

## Patentansprüche

1. Vorrichtungssteuerungsverfahren, das durch eine Steuerung (110) einer Vorrichtung (200) auszuführen ist, wobei das Verfahren umfasst:
Einstellen (S106), gemäß einem auf die Vorrichtung einwirkenden externen Reiz, eines Emotionsparameters (121), der eine Pseudoemotion ausdrückt;
wobei der Emotionsparameter (121) eine Pseudoemotion durch eine Position auf einer Emotionskarte (300) ausdrückt, wobei
die Emotionskarte (300) eine erste Achse aufweist, die einen Grad der Erregung angibt, und eine zweite Achse, die den Grad einer anderen Emotion als Erregung angibt; und
die Emotionskarte (300) einen ersten Bereich, der einen Grad stärkerer Erregung angibt, und einen zweiten Bereich, der einen Grad geringerer Erregung angibt, umfasst; und **dadurch gekennzeichnet, dass** das Verfahren ferner umfasst:
Bestimmen (S203), ob sich der eingestellte Emotionsparameter (121) in dem ersten Bereich der Emotionskarte (300) oder in dem zweiten Bereich der Emotionskarte (300) befindet; und
Steuern (S201-205), um (i) den eingestellten Emotionsparameter (121) zu einer vorbestimmten Position hin zu bewegen, die eine neutrale Emotion auf der Emotionskarte (300) angibt, wenn sich der eingestellte Emotionsparameter (121) in dem ersten Bereich befindet und zudem der externe Reiz in einem vorbestimmten Zeitraum nicht erfasst wird, und (ii) den eingestellten Emotionsparameter (121) auf der Emotionskarte (300) in einer Richtung abnehmender Erregung zu bewegen, wenn sich der eingestellte Emotionsparameter (121) in dem zweiten Bereich befindet und zudem der externe Reiz in einem vorbestimmten Zeitraum nicht erfasst wird.

2. Vorrichtungssteuerungsverfahren nach Anspruch 1, wobei
die neutrale Position einen ruhigen Zustand auf der Emotionskarte (300) darstellt;
der ruhige Zustand eine Verschiebung hin zu einem weniger erregten Zustand angibt; und
der erste Bereich ein Bereich ist, der darstellt, dass sich die Vorrichtung (200) nicht in dem ruhigen Zustand befindet.

3. Vorrichtungssteuerungsverfahren nach Anspruch 1, wobei
die neutrale Emotion den Ursprung in der Emotionskarte (300) angibt; und
das Steuern (S201-S205) umfasst:
schrittweises Ändern (S204) des eingestellten Emotionsparameters (121), sodass sich der eingestellte Emotionsparameter (121) der neutralen Emotion annähert, wenn bestimmt wird, dass sich der eingestellte Emotionsparameter (121) in dem ersten Bereich befindet und zudem der externe Reiz in dem vorbestimmten Zeitraum nicht erfasst wird.

4. Vorrichtungssteuerungsverfahren nach einem der Ansprüche 1 bis 3, wobei das Steuern umfasst:
Ändern (S204) einer Menge des eingestellten Emotionsparameters (121), die geändert wird, basierend auf einem Zeitraum, in dem der externe Reiz nicht erfasst wird.

5. Vorrichtungssteuerungsverfahren nach einem der Ansprüche 1 bis 3, wobei das Steuern umfasst:
Ändern (S106) einer Menge des eingestellten Emotionsparameters (121), die geändert wird, basierend auf einer Pseudopersönlichkeit der Vorrichtung (200).

6. Vorrichtungssteuerungsverfahren nach einem der Ansprüche 1 bis 3, wobei das Steuern umfasst:
Ändern eines Änderungsbetrags des eingestellten Emotionsparameters (121) gemäß einem Ladezustand einer in der Vorrichtung (200) enthaltenen Batterie (252).

7. Vorrichtungssteuerungsverfahren nach einem der Ansprüche 1 bis 3, wobei das Steuern umfasst:
Ändern eines Änderungsbetrags des eingestellten Emotionsparameters (121) basierend darauf, ob ein Laden einer in der Vorrichtung (200) enthaltenen Batterie (252) durchgeführt wird.

8. Vorrichtung (200), umfassend:
eine Steuerung (110), die dazu eingerichtet ist, das Steuerungsverfahren nach einem der Ansprüche 1 bis 5 auszuführen.

9. Vorrichtung (200) nach Anspruch 8, ferner umfassend:
eine Batterie (252); wobei
die Steuerung (110) dazu eingerichtet ist, einen Änderungsbetrag des eingestellten Emotionsparameters (121) gemäß einem Ladezustand der Batterie (252) zu ändern.

10. Vorrichtung (200) nach Anspruch 8, ferner umfassend:
eine Batterie (252); wobei
die Steuerung (110) dazu eingerichtet ist, einen Änderungsbetrag des eingestellten Emotionsparameters (121) basierend darauf zu ändern, ob ein Laden der Batterie (252) durchgeführt wird.

11. Programm, das durch einen Computer einer Vorrichtung (200) lesbar ist, wobei das Programm den Computer veranlasst, die Schritte des Steuerungsverfahrens nach einem der Ansprüche 1 bis 7 auszuführen.

## Revendications

1. Procédé de commande d'appareil destiné à être exécuté par un contrôleur (110) d'un appareil (200), le procédé comprenant :
le réglage (S106), en fonction d'un stimulus externe agissant sur l'appareil, d'un paramètre d'émotion (121) exprimant une pseudo-émotion ;
le paramètre d'émotion (121) exprime une pseudo-émotion par une position sur une carte d'émotions (300), dans lequel
la carte d'émotions (300) présente un premier axe indiquant un degré d'excitation et un second axe indiquant le degré d'une émotion autre que l'excitation ; et
la carte d'émotions (300) comprend une première zone indiquant un degré d'excitation plus élevée et une deuxième zone indiquant un degré d'excitation moindre ; et **caractérisé en ce que** le procédé comprend en outre :
le fait de déterminer (S203) si le paramètre d'émotion réglé (121) se trouve dans la première zone de la carte d'émotions (300) ou dans la deuxième zone de la carte d'émotions (300) ; et
la commande (S201-205) de façon à (i) déplacer le paramètre d'émotion réglé (121) vers une position prédéterminée indiquant une émotion neutre sur la carte d'émotions (300), lorsque le paramètre d'émotion réglé (121) se trouve dans la première zone et que, en outre, le stimulus externe n'est pas détecté pendant une période de temps prédéterminée, et (ii) déplacer le paramètre d'émotion réglé (121) sur la carte d'émotions (300) dans une direction de diminution de l'excitation, lorsque le paramètre d'émotion réglé (121) se trouve dans la deuxième zone et que, en outre, le stimulus externe n'est pas détecté pendant une période de temps prédéterminée.

2. Procédé de commande d'appareil selon la revendication 1, dans lequel
la position neutre représente un état calme sur la carte d'émotions (300) ;
l'état calme indique un déplacement vers un état moins excité ; et
la première zone est une zone représentant que l'appareil (200) n'est pas dans l'état calme.

3. Procédé de commande d'appareil selon la revendication 1, dans lequel
l'émotion neutre indique l'origine dans la carte d'émotions (300) ; et
la commande (S201-S205) comprend :
la modification (S204), par étapes, du paramètre d'émotion réglé (121) de sorte que le paramètre d'émotion réglé (121) se rapproche de l'émotion neutre, lorsqu'il est déterminé que le paramètre d'émotion réglé (121) se trouve dans la première zone et que, en outre, le stimulus externe n'est pas détecté pendant la période prédéterminée.

4. Procédé de commande d'appareil selon l'une quelconque des revendications 1 à 3, dans lequel la commande comprend :
la modification (S204) d'une quantité du paramètre d'émotion réglé (121) qui est modifiée sur la base d'une période pendant laquelle le stimulus externe n'est pas détecté.

5. Procédé de commande d'appareil selon l'une quelconque des revendications 1 à 3, dans lequel la commande comprend :
la modification (S106) d'une quantité du paramètre d'émotion réglé (121) qui est modifiée sur la base d'une pseudo-personnalité de l'appareil (200).

6. Procédé de commande d'appareil selon l'une quelconque des revendications 1 à 3, dans lequel la commande comprend :
la modification d'une quantité de changement du paramètre d'émotion réglé (121) en fonction d'une quantité de charge d'une batterie (252) comprise dans l'appareil (200).

7. Procédé de commande d'appareil selon l'une quelconque des revendications 1 à 3, dans lequel la commande comprend :
la modification d'une quantité de changement du paramètre d'émotion réglé (121) sur la base du fait que la charge d'une batterie (252) comprise dans l'appareil (200) est ou non en cours.

8. Appareil (200), comprenant :
un contrôleur (110) adapté à exécuter le procédé de commande selon l'une quelconque des revendications 1 à 5.

9. Appareil (200) selon la revendication 8, comprenant en outre :
une batterie (252) ; dans lequel
le contrôleur (110) est adapté à modifier une quantité de changement du paramètre d'émotion réglé (121) en fonction d'une quantité de charge de la batterie (252).

10. Appareil (200) selon la revendication 8, comprenant en outre :
une batterie (252) ; dans lequel
le contrôleur (110) est adapté à modifier une quantité de changement du paramètre d'émotion réglé (121) sur la base du fait que la charge de la batterie (252) est ou non en cours.

11. Programme lisible par un ordinateur d'un appareil (200), le programme amenant l'ordinateur à exécuter les étapes du procédé de commande selon l'une quelconque des revendications 1 à 7.
